# EUROPEAN PATENT APPLICATION

(11) **EP 1 526 593 A1**
(43) Date of publication of application: **27.04.2005**
(21) Application number: 04025056.5
(22) Date of filing: 21.10.2004
(51) Int. Cl.: H01M 8/02, H01M 8/10

(54) **Prevention of membrane contamination in electrochemical fuel cells**

(30) Priority: 23.10.2003 US 693672
(71) Applicant: BALLARD POWER SYSTEMS INC., Burnaby, B.C. V5J 5J9 (CA)
(72) Inventor: James, Gregory A., Coquitlam BC V3K 2X3 (CA); MacKinnon, Sean M., Burnaby BC V5E 4M8 (CA); Sousa, Duarte R., White Rock BC V4B 1S9 (CA); Summers, David A., Vancouver BC V6K 1Z5 (US); Williams, Warren M., North Vancouver BC V7N 4B4 (CA); Bellerive, Julie, Burnaby BC V3N 1T3 (CA); Bos, Myles L., Burnaby BC V3N 2G2 (CA); Rempel, Robert B., P., Vancouver BC V5T 4R4 (CA); Farrington, Simon, Vancouver BC V6R 1J2 (CA); McDermid, Scott J., Vancouver BC V5Z 2X7 (CA)
(74) Representative: Beyer, Andreas, Dr.

(57) **Abstract**

Contamination of the ion-exchange membrane in an electrochemical fuel cell can significantly reduce the lifetime. One source of contamination is from sealant materials, particularly if the sealant is silicone and impregnated into the peripheral region of the membrane electrode assembly (MEA) and thus in close proximity to the ion-exchange membrane. Contamination may be reduced or eliminated by separating the electrochemical reaction and/or the ion-exchange membrane from the sealant material. In an embodiment, this is done by having the sealing region substantially free of active electrocatalyst particles (for example, selectively printing the catalyst to avoid the sealing region or poisoning catalyst in the sealing region). In another embodiment, a barrier film is interposed between the ion-exchange membrane and the sealant material impregnated into the MEA. In yet another embodiment, a barrier plug is impregnated into the fluid diffusion layer adjacent to the sealant material impregnated into the MEA.

## Description

### BACKGROUND OF THE INVENTION

### Field of the Invention

The present invention relates to sealing techniques for electrochemical fuel cells and more particularly to preventing degradation of electrochemical fuel cell seals and contamination of other fuel cell parts such as the ion-exchange membrane.

### Description of the Related Art

Electrochemical fuel cells convert reactants, namely fuel and oxidant fluid streams, to generate electric power and reaction products. Electrochemical fuel cells employ an electrolyte disposed between two electrodes, namely a cathode and an anode. The electrodes each comprise an electrocatalyst disposed at the interface between the electrolyte and the electrodes to induce the desired electrochemical reactions. The location of the electrocatalyst generally defines the electrochemically active area.

Polymer electrolyte membrane (PEM) fuel cells generally employ a membrane electrode assembly (MEA) consisting of an ion-exchange membrane disposed between two electrode layers comprising porous, electrically conductive sheet material as fluid diffusion layers, such as carbon fiber paper or carbon cloth. In a typical MEA, the electrode layers provide structural support to the ion-exchange membrane, which is typically thin and flexible. The membrane is ion conductive (typically proton conductive), and also acts as a barrier for isolating the reactant streams from each other. Another function of the membrane is to act as an electrical insulator between the two electrode layers. The electrodes should be electrically insulated from each other to prevent short-circuiting. A typical commercial PEM is a sulfonated perfluorocarbon membrane sold by E.I. Du Pont de Nemours and Company under the trade designation NAFION®.

The MEA contains an electrocatalyst, typically comprising finely comminuted platinum particles disposed in a layer at each membrane/electrode layer interface, to induce the desired electrochemical reaction. The electrodes are electrically coupled to provide a path for conducting electrons between the electrodes through an external load.

In a fuel cell stack, the MEA is typically interposed between two separator plates that are substantially impermeable to the reactant fluid streams. The plates act as current collectors and provide support for the electrodes. To control the distribution of the reactant fluid streams to the electrochemically active area, the surfaces of the plates that face the MEA may have open-faced channels formed therein. Such channels define a flow field area that generally corresponds to the adjacent electrochemically active area. Such separator plates, which have reactant channels formed therein are commonly known as flow field plates. In a fuel cell stack a plurality of fuel cells are connected together, typically in series, to increase the overall output power of the assembly. In such an arrangement, one side of a given plate may serve as an anode plate for one cell and the other side of the plate may serve as the cathode plate for the adjacent cell. In this arrangement, the plates may be referred to as bipolar plates.

The fuel fluid stream that is supplied to the anode typically comprises hydrogen. For example, the fuel fluid stream may be a gas such as substantially pure hydrogen or a reformate stream containing hydrogen. Alternatively, a liquid fuel stream such as aqueous methanol may be used. The oxidant fluid stream, which is supplied to the cathode, typically comprises oxygen, such as substantially pure oxygen, or a dilute oxygen stream such as air. In a fuel cell stack, the reactant streams are typically supplied and exhausted by respective supply and exhaust manifolds. Manifold ports are provided to fluidly connect the manifolds to the flow field area and electrodes. Manifolds and corresponding ports may also be provided for circulating a coolant fluid through interior passages within the stack to absorb heat generated by the exothermic fuel cell reactions.

It is desirable to seal reactant fluid stream passages to prevent leaks or inter-mixing of the fuel and oxidant fluid streams. U.S. Patent No. 6,057,054, incorporated herein by reference in its entirety, discloses a sealant material impregnating into the peripheral region of the MEA and extending laterally beyond the edges of the electrode layers and membrane (i. e. , the sealant material envelopes the membrane edge).

For a PEM fuel cell to be used commercially in either stationary or transportation applications, a sufficient lifetime is necessary. For example, 5,000 hour operations may be routinely required. In practice, there are significant difficulties in consistently obtaining sufficient lifetimes as many of the degradation mechanisms and effects remains unknown. Accordingly, there remains a need in the art to understand degradation of fuel cell components and to develop design improvements to mitigate or eliminate such degradation. The present invention fulfills this need and provides further related advantages.

### BRIEF SUMMARY OF THE INVENTION

Membrane contamination represents a serious problem that can significantly reduce the lifetime of the PEM fuel cell. Specifically, it has been found that sealant impregnated into the edge of the electrode layers as in the 054' patent may degrade such that contaminants from the sealant then migrates to the membrane.

Sealant degradation and/or membrane contamination can be reduced or eliminated if the sealant in the electrode is separated from the electrochemical reactions taking place at the catalyst layer. This can be accomplished in many different ways as disclosed below. For example, in an embodiment, a membrane electrode assembly for an electrochemical fuel cell comprises:
(a) two fluid diffusion layers;
(b) an ion-exchange membrane interposed between the fluid diffusion layers;
(c) an electrocatalyst layer disposed at the interface between the ion-exchange membrane and each of the fluid diffusion layers;
(d) a fluid impermeable integral seal impregnated into the fluid diffusion layers in sealing regions thereof; and
(e) a barrier film interposed between the ion-exchange membrane and the fluid impermeable integral seals along at least a portion of the sealing region of at least one of the fluid diffusion layers wherein the barrier film is more chemically stable to acid hydrolysis than the integral seal. More particularly, the barrier film may be, for example, located between
the electrocatalyst layer and the fluid diffusion layer, between the ion-exchange membrane and the electrocatalyst layer, or even impregnated into the fluid diffusion layer.

In another embodiment, the barrier film may be placed by a barrier plug. Specifically, in this embodiment, a membrane electrode assembly for an electrochemical fuel cell comprises:
(a) two fluid diffusion layers;
(b) an ion-exchange membrane interposed between the fluid diffusion layers;
(c) an electrocatalyst layer disposed at the interface between the ion-exchange membrane and each of the fluid diffusion layers;
(d) a fluid impermeable integral seal impregnated into the fluid diffusion layers in sealing regions thereof; and
(e) a fluid impermeable barrier plug impregnated into the electrode layers in regions adjacent to the sealing regions of at least one of the fluid diffusion layers. If the integral seal is a silicone based seal, contaminants may include
mobile siloxanes that migrate into the membrane. The barrier film or barrier plug, may be, for example a thermoset or a thermoplastic.

Degradation of the sealant material may be greater on the cathode as compared to the anode as greater oxidative degradation would be expected at the cathode. While reduced membrane contamination would be expected when barrier films and barrier plugs are located at both the anode and cathode, benefits may be seen if such a barrier film is only located at one electrode, particularly if that electrode is the cathode.

Similarly, electrochemical degradation may be expected to be increased at certain locations within the fuel cell, for example, near the reactant inlets and/or outlets. Thus the barrier seal or barrier plug may either circumscribe the central, electrochemically active area or be located in only specific areas of increased sealant degradation.

A physical barrier may not be necessary to separate the sealant from electrochemical reactions. In another embodiment, a membrane electrode assembly for an electrochemical fuel cell comprises:
(a) two fluid diffusion layers;
(b) an ion-exchange membrane interposed between the fluid diffusion layers;
(c) an electrocatalyst layer comprising electrocatalyst particles and disposed at the interface between the ion-exchange membrane and each of the fluid diffusion layers; and
(d) a fluid impermeable integral seal impregnated into the fluid diffusion layers in sealing regions thereof.

The main difference in this last embodiment is that at least a portion of the sealing region of at least one of the fluid diffusion layers is substantially free of active electrocatalyst particles. For example, the electrocatalyst layer may not extend into the sealing region such that the portion of the sealing region is substantially free of any electrocatalyst particles. In an alternate further embodiment, electrocatalyst particles in the sealing region are poisoned such that the portion of the sealing region becomes substantially free of active electrocatalyst particles even though inactive particles remain.

Similarly, the region substantially free of active electrocatalyst particles may be on only one of the cathode or anode, more particularly only the cathode, or on both electrodes. Further, this region may circumscribe the central, electrochemically active area or be located only at areas of expected increased degradation.

These and other aspects of the invention will be evident upon reference to the attached figures and following detailed description.

### BRIEF DESCRIPTION OF THE DRAWINGS

Figure 1 is a partial cross-sectional view of a prior art membrane electrode assembly with an integral seal.
Figure 2 is an exploded partial cross-sectional view of a membrane electrode assembly comprising an embodiment of the present invention.
Figures 3a-d are partial cross-sectional views of a membrane electrode assembly comprising further embodiments of the present invention.
Figure 4 is a partial cross-sectional view of a membrane electrode assembly comprising a further embodiment of the present invention.

In the above figures, similar references are used in different figures to refer to similar elements.

### DETAILED DESCRIPTION OF THE INVENTION

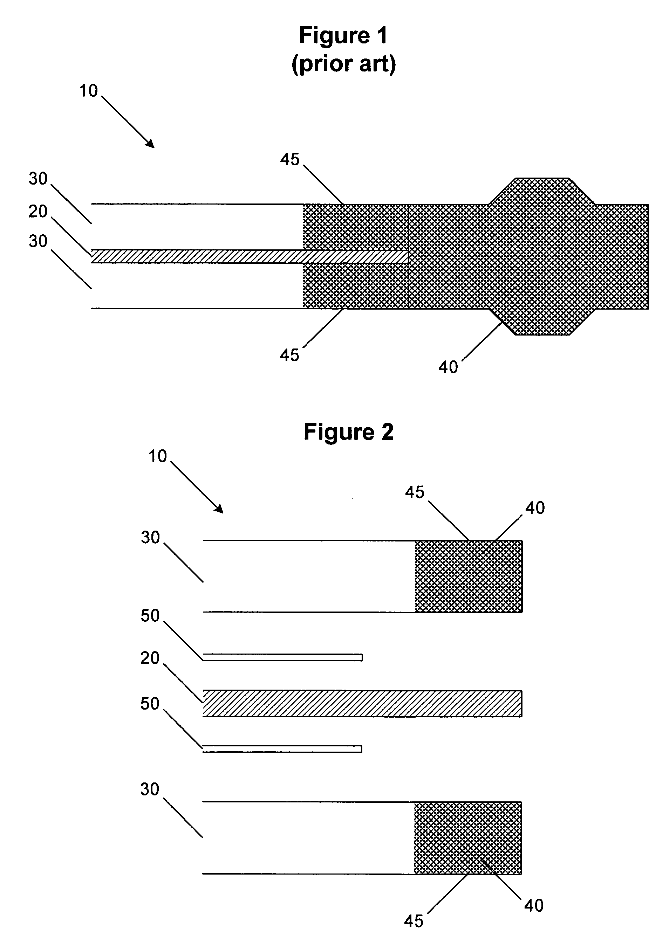

A cross-sectional representation of a perimeter edge of a sealed membrane electrode assembly (MEA) 10 as disclosed in U.S. Patent No. 6,057,054, is illustrated in Figure 1. A membrane 20 is interposed between fluid diffusion layers 30. Typically, fluid diffusion layers 30 comprise a porous electrically conductive sheet material of, for example, carbon fiber paper, woven or non-woven carbon fabric, or metal mesh or gauze. A thin layer of electrocatalyst 50 (not shown in Figure 1) is interposed between each of electrode layers 30 and membrane 20. A sealant material 40 impregnates into a sealing region 45 of the porous electrode layers 30 of MEA 10 and extends laterally beyond the edge of MEA 10 to envelope the peripheral region thereof.

As disclosed in the '054 patent, sealant material 40 may be a flow processable elastomer, such as, for example, a thermosetting liquid injection moldable compound (e.g., silicones, fluoroelastomers, fluorosilicones, ethylene propylene diene monomer (EPDM), and natural rubber). However, it has been discovered that sealant material 40 may not be chemically stable within the acidic, oxidative and reductive environment found in a fuel cell, particularly over the fuel cell lifetime.

Specifically, when silicones are used as sealant material 40, mobile siloxanes may migrate into membrane 20 where they may then be chemically oxidized to form silicon dioxide derivatives. This contamination may subsequently lead to internal fractures within membrane 20 and ultimate failure of the fuel cell. Without being bound by theory, the source of the mobile siloxanes may include leachable oligomers, volatile low molecular weight siloxanes and/or degradation products from the hydrolysis of silicone.

In particular, degradation appears to be localized within the region of MEA 10 where sealant material 40 is in close proximity to the active area of MEA 10. Thus sealant degradation can be reduced by physically separating sealant material 40 from the active area of MEA 10.

Figure 2 is an exploded cross-sectional partial view of MEA 10 illustrating an embodiment of the present invention. Sealant material 40 may extend laterally beyond the edge of MEA 10 as in Figure 1 but for ease of illustration, the exploded cross-sectional view in Figure 2 only illustrates up to the edge of MEA 10. Figure 2 also explicitly shows catalyst layer 50 interposed between membrane 20 and electrode layers 30. Specifically, catalyst layer 50 does not extend to sealing region 45. In a typical MEA, catalyst layers 50 would be co-extensive with at least one of ion-exchange membrane 20 or fluid diffusion layers 30 and in a flush-cut MEA as shown in MEA 10, catalyst layers 50 would extend to the edge of MEA 10.

Even though access to reactants is limited in sealing region 45 in a typical MEA 10, the presence of electrocatalyst in such sealing region 45 may still lead to oxidative and reductive degradation of sealing material 40. In comparison, the embodiment as illustrated in Figure 2 removes catalyst layer 50 from sealing region 45 thereby reducing such degradation.

In an alternative embodiment not shown, the electrocatalyst is specifically poisoned in the sealing region 45 of MEA 10. Though catalyst layer 50 may extend to the edge of MEA 10, active catalyst is thus only present in the central area of MEA 10 and sealant material 40 is physically separated from active catalyst as in the embodiment illustrated in Figure 2.

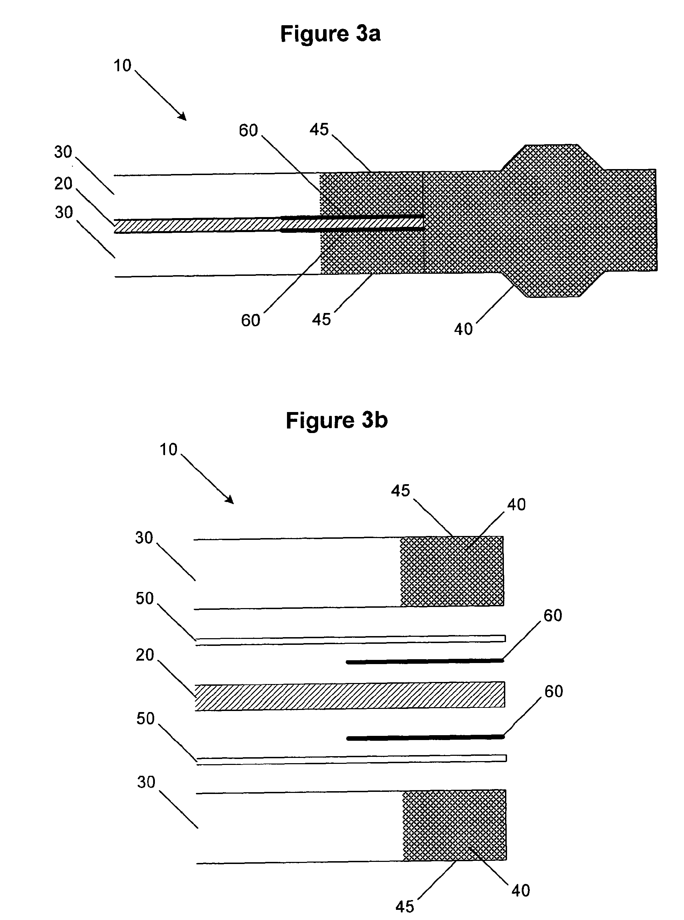

In another embodiment illustrated in Figure 3a, a barrier film 60 is interposed between membrane 20 and fluid diffusion layers 30. Barrier film 60 provides a physical barrier between membrane 20 and sealant material 40. Without being bound by theory, barrier film 60 may inhibit contact of sealant material 40 with catalyst layer 50 and/or membrane 20 to suppress or eliminate acid catalyzed hydrolysis. Further, diffusion of mobile siloxanes from sealant material 40 to membrane 20 may also be reduced or eliminated. Figures 3b-3d illustrate different embodiments wherein the barrier film is located at slightly different locations within MEA 10.

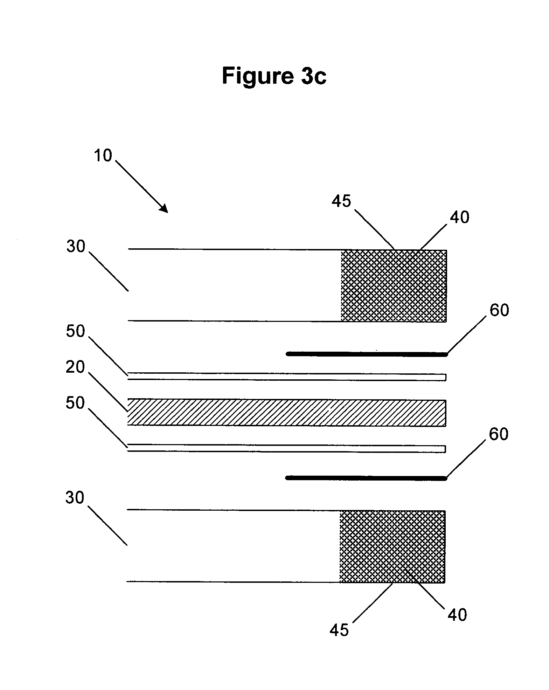

For example, in Figure 3b, barrier films 60 are interposed between membrane 20 and catalyst layers 50. In Figure 3c, barrier films 60 are interposed between fluid diffusion layers 30 and catalyst layers 50.

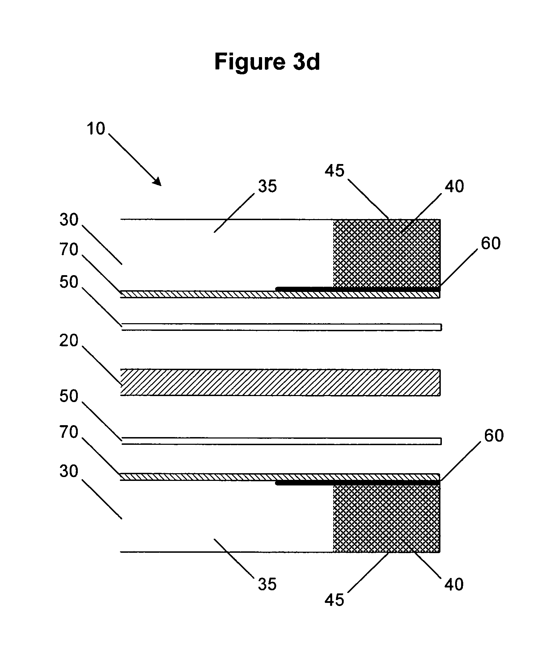

Figure 3d shows an alternative embodiment wherein barrier films 60 impregnate sheet material 35. A typical fluid diffusion layer 30, comprises a porous, electrically conductive sheet material 35, such as carbon fiber paper or carbon cloth with a carbon sub-layer 70 applied thereto. While carbon sub-layer 70 is not explicitly shown in the above embodiments, it would likely be present in a typical fluid diffusion layer 30. However, in the embodiment illustrated in Figure 3d, barrier film 60 is impregnated within sheet material 35 prior to application of carbon sub-layer 70. It is understood that Figure 3d is not to scale and barrier film 60 may impregnate through a significant portion of the thickness of sheet material 35.

It is also understood that in an MEA, particularly after bonding at elevated temperatures, individual layers may not remain as discrete layers as shown in Figures 3b-d. For example, there may be some impregnation of barrier film 60 in fluid diffusion layers 30 in the embodiment illustrated in Figure 3c. Similarly, in either or both of the embodiments in Figures 3b and 3c, barrier film 60 may flow into catalyst layer 50.

Barrier film 60 may comprise a material more stable to acid hydrolysis as compared to sealant material 40. For example, if sealant material is silicone, then barrier film 60 may be a thermoplastic or a thermoset that is processable up to 500°C and forms a physical barrier between the sealant material 40 and membrane 20 (see for example *Handbook of Plastics, Elastomers and Composites,* 3^{rd} edition, C.A. Harper ed., 1996, McGraw-Hill incorporated herein by reference in its entirety). Representative thermoplastics include polyvinylidene fluoride, polypropylene, polyethylene, polyolefins, PTFE and aromatic thermoplastics such as polyaryl ethers, PEEK, polysulfone etc. Representative thermosets include polyimide, epoxy, polyurethane, nitrile, butyl, TPEs, etc. Barrier film 60 may also comprise additives such as carbon black which may improve adhesion with catalyst layer 50.

All of the embodiments illustrated above in Figures 2 and 3a-d have the inactivation area extending from the edge of MEA 10 to slightly beyond sealing region 45. The inactivation area in these embodiments refers to the area of the MEA rendered inactive either by the absence/poisoning of catalyst or location of barrier film 60. By extending the inactivation area slightly beyond the edge of sealing region 45, reactive species are less likely to migrate to sealant material 40 and mobile siloxanes are less able to migrate to membrane 20, though improvements in performance may still be observed if sealing region 45 extends to or beyond the inactivation region. Similarly, improvements may also be observed if the inactivation region does not extend to the edge of MEA 10 as shown in Figures 2 and 3a-d particularly as the edge of MEA 10 has limited access to reactants.

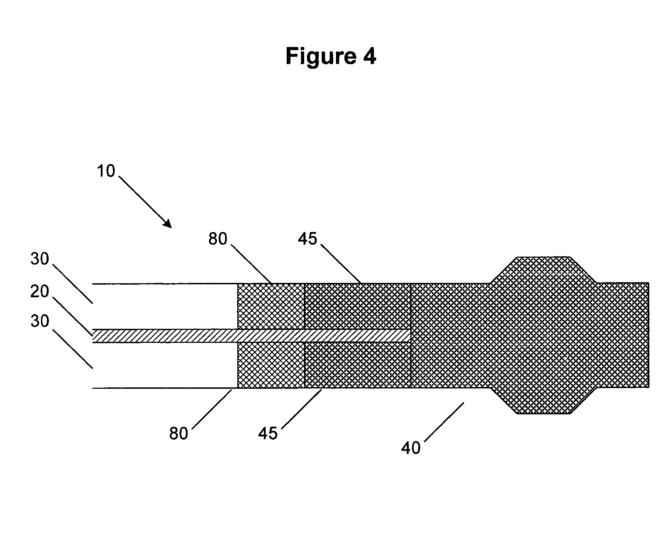

A further embodiment is illustrated in Figure 4 wherein a barrier plug 80 impregnates fluid diffusion layer 30. Similar thermoplastics and thermosets may be used for barrier plug 80 as barrier film 70 discussed above and is only limited by processing temperature less than the desulfonation temperature of membrane 20, typically less than 300°C. Without being bound by theory, barrier plug 80 reduces or eliminates reactant flowing through fluid diffusion layers 30, reacting at catalyst layers 50 to produce reactive species that can subsequently degrade sealant material 40.

Barrier plug 80 may impregnate the entire thickness of fluid diffusion layer 30 as illustrated though beneficial effects may still be seen if only a portion of the thickness is impregnated.

Specific regions of MEA 10 may be more susceptible to degradation of integral seal 40 than others. For example, degradation may be higher near the inlet/outlet reactant ports. As such, it may not be necessary to circumscribe the entire active area and significant improvements in sealant degradation may be observed if only portions of sealant material 40 are separated from the active area of MEA 10. Similarly, degradation may be higher on one electrode as compared to the other, for example on the cathode as compared to the anode. Thus less sealant degradation may be seen if only one side of MEA 10 has sealant material 40 physically separated from the active area of MEA 10. Alternatively, different methods could be used to physically separate the sealant material on the anode fluid diffusion layer from that used on the cathode fluid diffusion layer. For example, a barrier plug could be used with the anode fluid diffusion layer while a barrier film is used with the cathode fluid diffusion layer. Further, various embodiments as described above may be combined in one MEA. For example, a barrier plug as illustrated in Figure 4 may be used with a barrier film as in Figure 2a in the same or both fluid diffusion layers.

### EXAMPLES

Seven membrane electrode assemblies (MEAs) were prepared incorporating the various embodiments of the present invention as described above. MEA design 1 is a conventional MEA. The MEAs were then run for a period of time and then the membrane was analyzed by SEM EDX line scans to determine the ratio of Si to S. The larger the ratio of Si in the membrane indicates greater contamination which would likely lead to earlier failure of the fuel cell.

### Conventional MEA Design 1

MEA Design 1 was a conventional MEA. Carbon fiber paper was impregnated with PTFE (TGP-090 grade from Toray) and then screen printed with a 0.6 mg/cm² carbon base. The cathodes employed a conventional loading of carbon supported platinum catalyst and the anodes had a conventional loading of carbon supported platinum-ruthenium catalyst. The membrane electrolyte employed was Nafion® 112. The MEA was then bonded at 160°C, 325psi for 3 min followed by cooling at ambient conditions. The MEA was then cut to the desired size and a flow processable silicone elastomer (supplied by Wacker Chemie GmbH) was then injection molded into the edge of the MEA.

The same general procedure was then followed in preparing the remaining MEAs except as specifically noted below.

### MEA Design 2

In MEA Design 2, the catalyst layers were selectively printed as shown in Figure 2. To selectively print the catalyst layers, a stainless steel mask was machined to the desired dimensions. Approximately 8 to 10 ml of surfactant comprising 35% isopropanol in water was sprayed on the cathode electrode before catalyst printing. The surfactant was found to prevent catalyst bleedout during printing and to keep the printed image sharp and defined. No surfactant spraying was employed on the anode electrode. After the catalyst layers were screen printed, a die was used to selectively compact the printed image into the fluid diffusion layer. The die employed 200µm raised landings, machined to the same dimensions as the catalyst image to apply a compaction of approximately 86kN for approximately 16 seconds to the printed catalyst image only. Selective compaction prevents smearing and helps to maintain the sharpness of the printed image.

### MEA Design 3

In MEA Design 3, a barrier layer was introduced to the MEA as shown in Figure 3b. A 50 µm poly(vinylidene fluoride) sheet, supplied as Kynar® 740 by Atofina Chemical, was die cut into a frame to provide a 5 mm border outlining a central MEA and placed between the Nafion® membrane and each of the cathode and anode. The MEA was then bonded, cut and sealed as above for MEA Design 1.

### MEA Designs 4a and 4b

In MEA Designs 4a and 4b, a barrier layer was introduced to the MEA as shown in Figure 3c. A standard fluid diffusion layer having the carbon sublayer was covered with a mask to cover the active area of the MEA and then placed on a hot plate set to about 80°C. A 30 wt% solution of a fluororubber latex (Technoflon® TN latex from Solvay Solexis) was then spray coated onto the masked fluid diffusion layer for about 5 seconds followed by a subsequent drying of up to 2 minutes. This procedure was then repeated for the other electrode. In MEA Design 4a, the Technoflon® barrier layer was approximately 5µm thick and in MEA Design 4b, the Technoflon® barrier layer was approximately 10 µm thick. The air permeability of the coated fluid diffusion layer was then measured and compared to an uncoated, conventional fluid diffusion layer as shown below in Table 1. The coated fluid diffusion layers were then bonded to a Nafion® membrane, cut and sealed as discussed above for MEA Design 1.

**Table 1**

| Design | Air Permeability (cc/min) | |
|---|---|---|
| | anode | cathode |
| Conventional FDL | 2400 | 2400 |
| Design 4a | 330 | 1300 |
| Design 4b | 11 | 30 |

Differences between anode and cathode fluid diffusion layers are due to the conventional fluid diffusion layer used and not to a different application of the Technoflon® barrier layer. Specifically, it is believed that increased impregnation of the anode fluid diffusion layer with PTFE as compared to the cathode fluid diffusion layer results in the decreased air permeability. Differences in air permeability between the conventional anode FDL and cathode FDL are believed to be hidden by the large air permeability measured, specifically 2400 cc/min.

### MEA Design 5

In MEA Design 5, a barrier layer was introduced to the MEA as shown in Figure 3d. A 50 µm poly(vinylidene fluoride) sheet, supplied as Kynar® 740 by Atofma Chemical, was die cut into a frame and placed on a sheet of carbon fiber paper impregnated with PTFE. The assembly was covered with a 50 µm PTFE release sheet and interposed between stainless steel sheets. The assembly was then hot pressed under a load of approximately 300 psi, 200°C for 1.5 minutes using a reciprocating bonding press. The resulting assembly was removed from the press, the top stainless sheet and PTFE release sheet were then removed to provide the carbon fiber paper impregnated with a Kynar® barrier layer. This was followed by conventional carbon sublayer screen printing, catalyst screen printing, bonding, cutting and sealing as discussed above in MEA Design 1.

### MEA Design 6

In MEA Design 6, a barrier plug was introduced to the MEA as shown in Figure 4. A 50 µm poly(vinylidene fluoride) sheet, supplied as Kynar® 740 by Atofina Chemical, was die cut into a 2 mm frame outlining standard MEA active area dimensions and placed on both sides of an unbonded MEA prepared as in MEA Design 1 above. Standard bonding conditions allow the Kynar® frame to liquify and penetrate the anode and cathode fluid diffusion layers. The MEA was then cut and sealed conventionally as in MEA Design 1.

### Analysis

Each MEA was then subjected to dynamic cycling testing. After a period of time, the respective membrane was then tested to determine the silicon to sulfur ratio present in the membrane. The results of this measurement are shown in Table 2. A larger ratio of silicon to sulfur indicates greater contamination of the membrane. The exact chemical species of silicon present in the membrane was not tested but is not believed to be important. Silicon in any form represents a contaminant within the membrane which could lead to premature failure of the fuel cell.

**Table 2**

| MEA Design | Hours of Operation | Si:S ratio |
|---|---|---|
| 1 | 519 779 1023 | 2.85-3.87 2.06-2.94 1.98-2.75 |
| 2 | 425 | limit |
| 3 | 850 | limit |
| 4a | 508 1236 | 0.44-1.03 1.19-2.18 |
| 4b | 728 1215 | 0.48-0.63 0.52-0.68 |
| 5 | 600 1050 | limit limit |
| 6 | 575 | limit |

Limit means that the amount of silicon present in the membrane was below the detection limit of the measurement.

As can be seen from table 1, all of MEA Designs 2 to 6 reduced the amount of silicon contamination in the membrane as compared to the conventional MEA Design 1. With MEA Designs 2, 3, 5 and 6, the amount of silicon contamination was reduced to such a great extent that the detection limit of silicon in the membrane was reached. Even for design 4a with a 5 µm Technoflon® barrier film, the amount of silicon contamination was reduced. Increasing the thickness of the barrier film to 10µm and consequently reducing the air permeability (as shown in table 1 above) resulted in yet further improvements in reduced silicon contamination. Increasing the thickness further would be expected to result in additional reductions in silicon contamination, perhaps approaching the detection limit as seen with the other MEA Designs discussed above. Thus the barrier film does not need to be gas impermeable and even a gas permeability of 1300 cc/min of a coated fluid diffusion layer is acceptable to provide reduced silicon contamination.

From the foregoing, it will be appreciated that, although specific embodiments of the invention have been described herein for purposes of illustration, various modifications may be made without deviating from the spirit and scope of the invention. Accordingly, the invention is not limited except as by the appended claims.

## Claims

1. A membrane electrode assembly for an electrochemical fuel cell comprising:
two fluid diffusion layers;
an ion-exchange membrane interposed between the fluid diffusion layers;
an electrocatalyst layer disposed at the interface between the ion-exchange membrane and each of the fluid diffusion layers;
a fluid impermeable integral seal impregnated into the fluid diffusion layers in sealing regions thereof; and
a barrier film interposed between the ion-exchange membrane and the fluid impermeable integral seals along at least a portion of the sealing region of at least one of the fluid diffusion layers wherein the barrier film is more chemically stable to acid hydrolysis than the integral seal.

2. The membrane electrode assembly of claim 1 wherein the barrier film is between the electrocatalyst layer and the fluid diffusion layer.

3. The membrane electrode assembly of claim 1 wherein the barrier film is between the ion-exchange membrane and the electrocatalyst layer.

4. The membrane electrode assembly of claim 1 wherein the barrier film is impregnated into the fluid diffusion layer.

5. The membrane electrode assembly of claim 1 wherein the fluid impermeable integral seal comprises silicone.

6. The membrane electrode assembly of claim 5 wherein the barrier film is a thermoplastic or a thermoset.

7. The membrane electrode assembly of claim 5 wherein the barrier film is polyvinylidene fluoride, polypropylene, polyethylene, polyolefins, PTFE, polyaryl ethers, PEEK, polysulfone, polyimide, epoxy, polyurethane, nitrile, butyl, or TPEs.

8. The membrane electrode assembly of claim 1 wherein the barrier film is a thermoplastic or a thermoset.

9. The membrane electrode assembly of claim 1 wherein the barrier film is polyvinylidene fluoride, polypropylene, polyethylene, polyolefins, PTFE, polyaryl ethers, PEEK, polysulfone, polyimide, epoxy, polyurethane, nitrile, butyl, or TPEs.

10. The membrane electrode assembly of claim 1 wherein the at least one of the fluid diffusion layers is the cathode fluid diffusion layer.

11. The membrane electrode assembly of claim 1 wherein the at least one of the fluid diffusion layers is both the anode and cathode fluid diffusion layers.

12. The membrane electrode assembly of claim 1 wherein the sealing regions circumscribe a central, electrochemically active area.

13. The membrane electrode assembly of claim 12 wherein the barrier film circumscribes the central, electrochemically active area.

14. The membrane electrode assembly of claim 1 wherein the fluid impermeable integral seal extends laterally beyond the ion-exchange membrane and the fluid diffusion layers to thereby envelope a peripheral region of both of the fluid diffusion layers and the ion-exchange membrane.

15. A membrane electrode assembly for an electrochemical fuel cell comprising:
two fluid diffusion layers;
an ion-exchange membrane interposed between the fluid diffusion layers;
an electrocatalyst layer disposed at the interface between the ion-exchange membrane and each of the fluid diffusion layers;
a fluid impermeable integral seal impregnated into the fluid diffusion layers in sealing regions thereof; and
a fluid impermeable barrier plug impregnated into the electrode layers in regions adjacent to the sealing regions of at least one of the fluid diffusion layers.

16. The membrane electrode assembly of claim 15 wherein the fluid impermeable integral seal comprises silicone.

17. The membrane electrode assembly of claim 16 wherein the barrier plug is a thermoplastic or a thermoset.

18. The membrane electrode assembly of claim 16 wherein the barrier film is polyvinylidene fluoride, polypropylene, polyethylene, polyolefins, PTFE, polyaryl ethers, PEEK, polysulfone, polyimide, epoxy, polyurethane, nitrile, butyl, or TPEs.

19. The membrane electrode assembly of claim 15 wherein the barrier plug is a thermoplastic or a thermoset.

20. The membrane electrode assembly of claim 15 wherein the barrier film is polyvinylidene fluoride, polypropylene, polyethylene, polyolefins, PTFE, polyaryl ethers, PEEK, polysulfone, polyimide, epoxy, polyurethane, nitrile, butyl, or TPEs.

21. The membrane electrode assembly of claim 15 wherein the at least one of the fluid diffusion layers is the cathode fluid diffusion layer.

22. The membrane electrode assembly of claim 15 wherein the at least one of the fluid diffusion layers is both the anode and cathode fluid diffusion layers.

23. The membrane electrode assembly of claim 15 wherein the sealing regions circumscribe a central, electrochemically active area.

24. The membrane electrode assembly of claim 23 wherein the barrier film circumscribes the central, electrochemically active area.

25. The membrane electrode assembly of claim 15 wherein the fluid impermeable integral seal extends laterally beyond the ion-exchange membrane and the fluid diffusion layers to thereby envelope a peripheral region of both of the fluid diffusion layers and the ion-exchange membrane.

26. A membrane electrode assembly for an electrochemical fuel cell comprising:
two fluid diffusion layers;
an ion-exchange membrane interposed between the fluid diffusion layers;
an electrocatalyst layer comprising electrocatalyst particles and disposed at the interface between the ion-exchange membrane and each of the fluid diffusion layers; and
a fluid impermeable integral seal impregnated into the fluid diffusion layers in sealing regions thereof;
wherein at least a portion of the sealing region of at least one of the fluid diffusion layers is substantially free of active electrocatalyst particles.

27. The membrane electrode assembly of claim 26 wherein the at least a portion of the sealing region is substantially free of electrocatalyst particles.

28. The membrane electrode assembly of claim 26 wherein the electrocatalyst particles in the at least a portion of the sealing region have been poisoned.

29. The membrane electrode assembly of claim 26 wherein the fluid impermeable integral seal comprises silicone.

30. The membrane electrode assembly of claim 26 wherein the at least one of the fluid diffusion layers is the cathode fluid diffusion layer.

31. The membrane electrode assembly of claim 26 wherein the at least one of the fluid diffusion layers is both the anode and cathode fluid diffusion layers.

32. The membrane electrode assembly of claim 26 wherein the sealing regions circumscribe a central, electrochemically active area.

33. The membrane electrode assembly of claim 32 wherein the at least a portion of the sealing region circumscribes the central, electrochemically active area.

34. The membrane electrode assembly of claim 26 wherein the fluid impermeable integral seal extends laterally beyond the ion-exchange membrane and the fluid diffusion layers to thereby envelope a peripheral region of both of the fluid diffusion layers and the ion-exchange membrane.
